# EUROPÄISCHE PATENTSCHRIFT

(11) **EP 0 891 696 B1**
(45) Veröffentlichungstag und Bekanntmachung des Hinweises auf die Patenterteilung: **24.07.2002**
(21) Anmeldenummer: 98106214.4
(22) Anmeldetag: 04.04.1998
(51) Int. Cl.: A01D 61/00

(54) **Föderkanal für halmförimiges Erntegut**
Conveyor duct for crop
Couloir de transport pour produits de récolte

(30) Priorität: 17.07.1997 DE 19730701
(43) Veröffentlichungstag der Anmeldung: 20.01.1999
(73) Patentinhaber: CLAAS Selbstfahrende Erntemaschinen GmbH, 33428 Harsewinkel (DE)
(72) Erfinder: Hamann, Gerhard, 33428 Harsewinkel (DE)

(56) Entgegenhaltungen:
- DE-A- 2 619 946
- DE-A- 4 132 246
- DE-B- 1 043 204
- US-A- 3 767 034
- US-A- 3 780 851
- US-A- 5 174 433
- PATENT ABSTRACTS OF JAPAN vol. 097, no. 003, 31. März 1997 & JP 08 308358 A (MITSUBISHI AGRICULT MACH CO LTD), 26. November 1996

## Beschreibung

Die Erfindung bezieht sich auf einen Förderkanal für halmförmiges Erntegut, insbesondere für die Förderung des Erntegutes vom Schneidwerk zum Dreschwerk eines Mähdreschers nach dem Oberbegriff des Patentanspruches 1, wie er beispielsweise aus US-A-5174433 bekannt ist.

Förderkanäle für Mähdrescher sind bereits in verschiedenen Ausführungen bekannt. Größtenteils werden hierfür schräg angeordnete und schwenkbar mit dem Maschinenrahmen des Mähdreschers verbundene Kanalgehäuse verwendet, in denen umlaufende Förderketten und mit diesen verbundene Förderleisten angebracht sind, die das Erntegut unterschlächtig zu der Drescheinrichtung fördern (DE 34 06 696 C2). Der Antrieb der Förderketten erfolgt dabei über auf der oberen angetriebenen Welle befestigte Kettenräder, die gleichzeitig der Kettenumlenkung dienen. Der Nachteil dieser Ausführung besteht darin, daß sich im Bereich dieser Kettenräder und besonders an deren seitlichen Flanken das Halmgut zwischen den beweglichen und ortsfesten Bauteilen staut und verklemmt. Diese Gutansammlungen, die insbesondere bei feuchtem Halmgut auftreten, führen dazu, daß sich die Förderketten im Verlauf des Erntevorganges von den Zähnen der Kettenräder abheben. Infolgedessen tritt ein Überspringen der Förderketten auf, wodurch eine Schiefstellung auftritt und kein synchroner Lauf der einzelnen Kettenstränge untereinander mehr gewährleistet ist. Dadurch entstehen Verspannungen innerhalb der Förderkette, die bis zum Bruch derselben und daraus resultierenden Folgeschäden und Maschinenausfall führen.

Der Erfindung liegt die Aufgabe zugrunde, die Förderketten so auszuführen, daß im oberen Umlenkbereich eine Ansammlung von Halmgut vermieden und dadurch ein störungsfreier Erntevorgang erreicht wird.

Erfindungsgemäß wird diese Aufgabe durch die im Patentanspruch 1 genannten Merkmale gelöst. Weitere vorteilhafte Ausführungen des Erfindungsgegenstandes ergeben sich aus den weiteren Ansprüchen. Durch die Erfindung wird mit einfachen technischen Mitteln eine Erntegutansammlung im Bereich der oberen Umlenkung der Förderketten vermieden und dadurch eine störungsfreie und sichere Funktionsweise des Förderkanals gewährleistet.

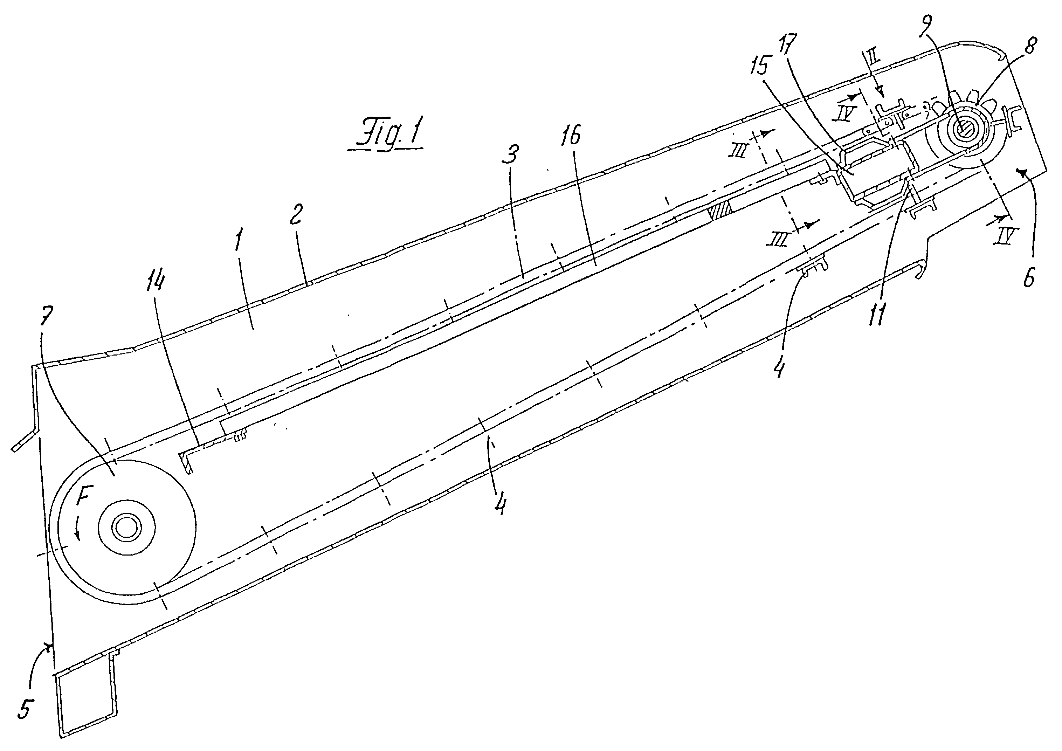

Die Erfindung wird nachstehend an einem Ausführungsbeispiel näher erläutert. In der zugehörigen Zeichnung zeigen
- Figur 1: einen Förderkanal in einer schematischen Längsschnittdarstellung,

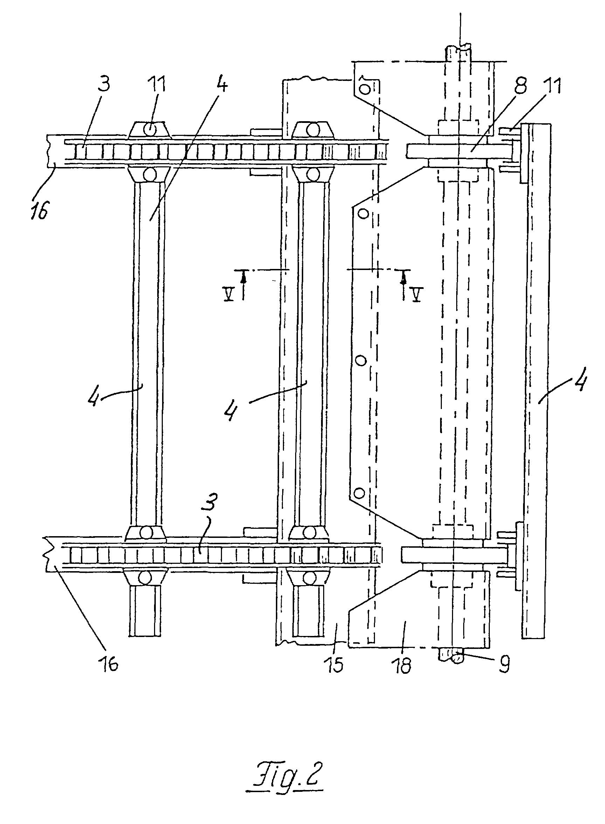

- Figur 2: die Ansicht II nach Figur 1,

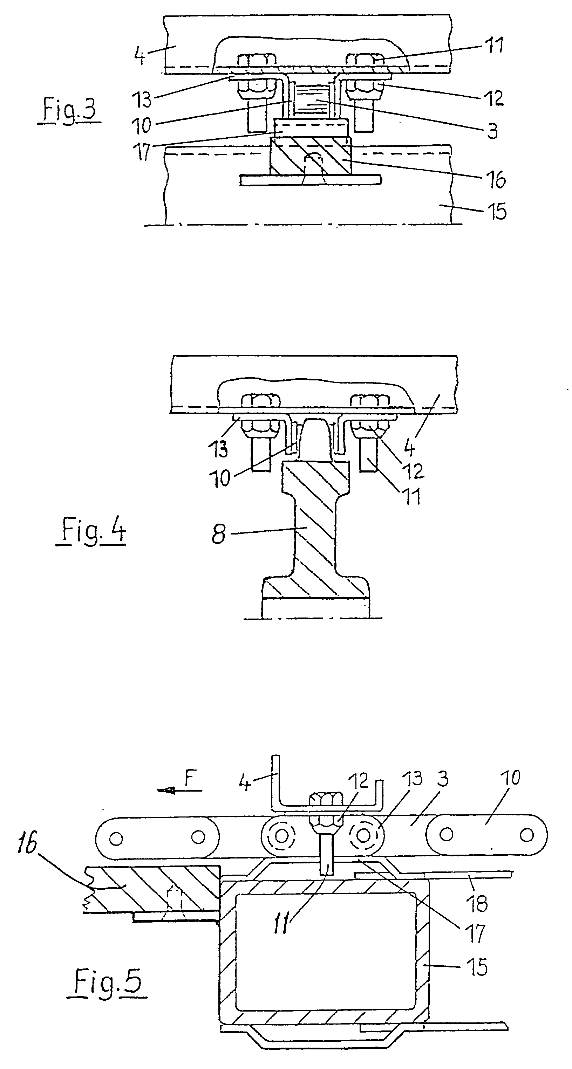

- Figur 3: den Schnitt III-III nach Figur 1,
- Figur 4: den Schnitt IV-IV nach Figur 1,
- Figur 5: den Schnitt V-V nach Figur 2.

Zum Transport des Erntegutes ist zwischen dem Schneidwerk und dem Dreschwerk eines nicht dargestellten Mähdreschers ein schräg nach oben verlaufender Förderkanal 1 angeordnet. Dieser besteht im wesentlichen aus einem Kanalgehäuse 2 und aus mehreren längs verlaufenden Förderketten 3, zwischen denen Förderleisten 4 befestigt sind. Das Kanalgehäuse 2 weist gegenüber dem Schneidwerk an der vorderen Seite eine Annahmeöffnung 5 und an der hinteren Seite eine an das Dreschwerk grenzende Abgaböffnung 6 auf. Die umlaufenden Förderketten 3 werden auf einer unteren Umlenktrommel 7 und auf oberen Kettenrädern 8 geführt, die auf einer angetriebenen Welle 9 angeordnet sind. An den Förderketten 3 sind beidseitig mit Abstand und parallel zu den Kettengliedern verlaufende Räumstifte befestigt, die mit ihren freien nach innen gerichteten Enden über die Kettenglieder 10 überstehen. Als Räumstifte die mit den Förderketten 3 umlaufen, können verschiedenartig profilierte Mitnahmeelemente verwendet werden, die eine Förderwirkung auf das Erntegut ausüben. Im dargestellten Ausfiihrungsbeispiel sind die Räumstifte als Schrauben ausgebildet, die gleichzeitig zur Befestigung der Förderleisten 4 an den Förderketten 3 dienen. Die U-förmig profilierten Förderleisten 4 sind dabei mittels Schrauben 11 und Muttern 12 an Winkellaschen 13 befestigt, die beidseitig an den Förderketten 3 angebracht sind. Um den Räumeffekt zu erhöhen, sind die Schrauben 11 verlängert ausgebildet, so daß sie mit ihren freien Enden über die Kettenglieder 10 hinausragen. Durch diese Ausbildung und Anordnung wirkt der freie Schaft der Schrauben 11 bei der Umlaufbewegung der Förderketten 4 auf das Erntegut ein und verhindert somit eine Anhäufung und das Wickeln von Ernteguthalmen an den gefährdeten Bereichen der Förderkanalbauteile. Zwischen einem unteren und oberen Querträger 14, 15 sind im Bereich unterhalb der Förderketten 3 längsverlaufende Führungsleisten 16 angebracht, deren Profilbreite so gewählt ist, daß die Schraubenbolzen 11 die Leiste seitlich umgreifen, wodurch die Kette eine zusätzliche Seitenführung zwischen ihren Umlenkstellen erfährt. Zum Ausgleich der Höhendifferenz zwischen dem oberen Querträger 15 und der Innenseite der Förderkette 3 sowie zum Vermeiden der Kollision der freien Enden der Schrauben 11 mit dem Querträger 15, sind auf der Ober- und Unterseite des Querträgers 15 im Laufbereich der Förderketten 3 Distanzbleche 17 befestigt. Die Höhe der Distanzbleche 17 ist so bemessen, daß das Ende der Schrauben 11 die Oberfläche des Querträgers 15 nicht berührt. Ihre Breite ist etwas geringer als der lichte Abstand zweier benachbarter Schrauben 11. Zwischen den Kettenrädern 8 ist die obere angetriebene Welle 9 mit einem Wickelschutzblech 18 umgeben, das am oberen Querträger 15 lösbar befestigt ist und sich von diesem bis um die Welle 9 erstreckt. Dadurch wird der axiale Abstand zwischen zwei benachbarten Kettenrädern 8 überbrückt und die vorhandenen Freiräume abgedeckt.
Die Förderrichtung der Förderketten 3 ist mit F gekennzeichnet.

### Bezugszeichenaufstellung

- 1 -: Förderkanal
- 2 -: Kanalgehäuse
- 3 -: Förderketten
- 4 -: Förderleisten
- 5: Annahmeöffnung
- 6 -: Abgabeöffnung
- 7 -: Umlenktrommel
- 8 -: Kettenräder
- 9 -: Welle
- 10 -: Kettenglieder
- 11 -: Schrauben
- 12 -: Muttern
- 13 -: Winkellaschen
- 14 -: unterer Querträger
- 15 -: oberer Querträger
- 16 -: Führungsleisten
- 17 -: Distanzbleche
- 18 -: Wickelschutzblech
- F -: Förderrichtung

## Patentansprüche

1. Förderkanal (1) für halmförmiges Erntegut, insbesondere für die Förderung des Erntegutes vom Schneidwerk zum Dreschwerk eines Mähdreschers, mit mehreren innerhalb eines Kanalgehäuses (2) umlaufenden Förderketten (3) und mit diesen verbundenen, dazwischen angeordneten Förderleisten (4), wobei die Förderketten auf einer unteren Umlenktrommel (7) und auf einer oberen angetriebenen Welle (9) angeordneten Kettenrädern (8) geführt sind,
**dadurch gekennzeichnet,**
**dass** an den Förderketten (3) beidseitig mit Abstand und etwa parallel zu den Kettengliedern (10) verlaufende Räumstifte (11) angeordnet sind, die mit ihren freien Enden in dem den Förderleisten (4) abgewandten Bereich über die Kettenglieder (10) überstehen.

2. Förderkanal nach Anspruch 1,
**dadurch gekennzeichnet,**
**daß** die mit den Förderketten (3) umlaufenden Räumstifte als profilierte Mitnahmeelemente ausgeführt sind.

3. Förderkanal nach Anspruch 1 und 2,
**dadurch gekennzeichnet,**
**daß** die Räumstifte als Schrauben (11) ausgebildet sind.

4. Förderkanal nach Anspruch 1 bis 3,
**dadurch gekennzeichnet,**
**daß** die Schrauben (11) derartig verlängert ausgebildet sind, daß deren freie Enden über die Kettenglieder (10) überstehen.

5. Förderkanal nach Anspruch 1 bis 4,
**dadurch gekennzeichnet,**
**daß** mit den Schrauben (11) gleichzeitig die Förderleisten (4) mit den Förderketten (3) verbunden sind.

6. Förderkanal nach Anspruch 1 bis 5,
**dadurch gekennzeichnet,**
**daß** die Räumstifte (11) bei ihrer Bewegung zwischen den Kettenrädern (8) und der Umlenktrommel (7) eine Führungsleiste (16) mit geringem Abstand seitlich umgreifen

7. Förderkanal nach Anspruch 1 bis 5,
**dadurch gekennzeichnet,**
**daß** am oberen Querträger (15) im Laufbereich der Förderketten (3) Distanzbleche (17) befestigt sind.

## Claims

1. A conveyor passage (1) for crop material in stalk form, in particular for conveying the crop material from the cutting mechanism to the threshing mechanism of a combine harvester, comprising a plurality of conveyor chains (3) which circulate within a passage housing (2) and conveyor bars (4) which are connected to and arranged between the conveyor chains, wherein the conveyor chains are guided on a lower direction-changing drum (7) and chain wheels (8) arranged on an upper driven shaft (9), **characterised in that** arranged on the conveyor chains (3) at both sides are clearing pins (11) which extend at a spacing and substantially parallel to the chain links (10) and which with their free ends project beyond the chain links (10) in the region away from the conveyor bars (4),

2. A conveyor passage according to claim 1 **characterised in that** the clearing pins which circulate with the conveyor chains (3) are in the form of profiled entrainment elements.

3. A conveyor passage according to claim 1 and claim 2 **characterised in that** the clearing pins are in the form of screws (11).

4. A conveyor passage according to claims 1 to 3 **characterised in that** the screws (11) are of a prolonged nature in such a way that the free ends thereof project beyond the chain links (10).

5. A conveyor passage according to claims 1 to 4 **characterised in that** the conveyor bars (4) are simultaneously connected to the conveyor chains (3) with the screws (11).

6. A conveyor passage according to claims 1 to 5 **characterised in that** when the clearing pins move between the chain wheels (8) and the direction-changing drum (7) the clearing pins (11) laterally embrace a guide bar (16) at a small spacing.

7. A conveyor passage according to claims 1 to 5 **characterised in that** spacer plates (17) are fixed to the upper transverse bearer (15) in the region of movement of the conveyor chains (3).

## Revendications

1. Canal d'alimentation (1) pour du produit récolté sous forme de tiges, en particulier pour le transfert du produit récolté du mécanisme de coupe au système batteur d'une moissonneuse-batteuse, avec plusieurs chaînes d'alimentation (3) tournant à l'intérieur d'un carter de canal (2) et avec des barrettes de convoyage (4) reliées à celles-ci, disposées entre elles, les chaînes d'alimentation étant guidées sur un tambour inférieur de renvoi (7) et sur des roues à chaînes (8) disposées sur un arbre supérieur entraîné (9), **caractérisé en ce que** des broches de dégagement (11) sont disposées le long des chaînes d'alimentation (3), à distance de part et d'autre de celles-ci et sensiblement parallèlement aux maillons de chaînes (10) et, par l'intermédiaire de leur extrémité libre, dépassent des maillons de chaînes (10) dans la zone située à l'opposé des barrettes de convoyage (4).

2. Canal d'alimentation selon la revendication 1, **caractérisé en ce que** les broches de dégagement défilant avec les chaînes d'alimentation (3) sont conçues sous la forme d'éléments d'entraînement profilés.

3. Canal d'alimentation selon les revendications 1 et 2, **caractérisé en ce que** les broches de dégagement sont conçues sous la forme de vis (11).

4. Canal d'alimentation selon les revendications 1 à 3, **caractérisé en ce que** les vis (11) sont prolongées de façon que leur extrémité libre dépasse des maillons de chaînes (10).

5. Canal d'alimentation selon les revendications 1 à 4, **caractérisé en ce que**, grâce aux vis (11), les barrettes de convoyage (4) sont en même temps reliées aux chaînes d'alimentation (3).

6. Canal d'alimentation selon les revendications 1 à 5, **caractérisé en ce que**, lors de leur déplacement entre les roues à chaînes (8) et le tambour de renvoi (7), les broches de dégagement (11) entourent une barrette de guidage (16) à une distance réduite.

7. Canal d'alimentation selon les revendications 1 à 5, **caractérisé en ce que** des tôles d'écartement (17) sont fixées à la traverse supérieure (15) dans la zone de passage des chaînes d'alimentation (3).
